(19) Europäisches Patentamt / European Patent Office / Office européen des brevets

(11) **EP 1 503 193 B1**

(12) **EUROPÄISCHE PATENTSCHRIFT**

(45) Veröffentlichungstag und Bekanntmachung des Hinweises auf die Patenterteilung:
**09.05.2007   Patentblatt 2007/19**

(51) Int Cl.:
*G01J 3/46* (2006.01)        *B41F 33/00* (2006.01)

(21) Anmeldenummer: **04017722.2**

(22) Anmeldetag: **27.07.2004**

(54) **Verfahren für die Überprüfung und Auswahl von Druckfarben**

Method for checking and selecting inks

Procédé pour la vérification et la sélection des encres d'impression

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.07.2003   DE 10335145**

(43) Veröffentlichungstag der Anmeldung:
**02.02.2005   Patentblatt 2005/05**

(73) Patentinhaber: **Giesecke & Devrient GmbH**
**81677 München (DE)**

(72) Erfinder:
• **Stenzel, Gerhard, Dr.**
**80686 München (DE)**
• **Schiffmann, Peter**
**85356 Freising (DE)**
• **Rauscher, Wolfgang, Dr.**
**81373 München (DE)**

(74) Vertreter: **Klunker . Schmitt-Nilson . Hirsch**
**Winzererstrasse 106**
**80797 München (DE)**

(56) Entgegenhaltungen:
**DE-A1- 3 925 011        US-B1- 6 483 607**

## Beschreibung

Die vorliegende Erfindung betrifft ein Verfahren für die Überprüfung und Auswahl von Druckfarben, insbesondere Stichtiefdruckfarben.

Verfahren für die Überprüfung und Auswahl von Druckfarben sind in weitem Umfang bekannt. Besondere Probleme ergeben sich jedoch beim Stichtiefdruck, der auch Intagliodruck genannt wird. Dabei handelt sich um einen speziellen Linientiefdruck, der vor allem zur Erzeugung von Wertdokumenten, z. B. Banknoten, verwendet wird. In die Druckplatten werden üblicherweise Linien oder sonstige Gestaltungselemente eingestochen oder eingraviert, wobei die Tiefe der Gravuren üblicherweise zwischen 4 und 180 $\mu$m, auch auf einer einzigen Druckplatte, variieren kann. Durch die Variation der gravierten Gestaltungselemente variiert auch die Schichtdicke der beim Druckvorgang aufgebrachten Druckfarben stark. Übliche Werte für die bei einem Druckvorgang auf ein verwendetes Substrat, z.B. Papier, übertragenen Schichtdicken liegen nach dem Verdunsten des Lösungsmittels der Druckfarbe typischerweise zwischen 0,5 und 12 $\mu$m.

Bei den bekannten Vorgehensweisen ist es jedoch üblich, die colorimetrischen Eigenschaften der verwendeten Druckfarben mittels eines vollflächig bedruckten Probedrucks zu überprüfen. Für die Herstellung der bekannten Probedrucke werden dabei feste, definierte Flächengewichte für die Druckfarben verwendet, so wird beispielsweise ein Andruck mit 8 Gramm Druckfarbe pro Quadratmeter hergestellt und als Probedruck für die Überprüfung der colorimetrischen Eigenschaften der Druckfarbe verwendet.

Aus der Patentschrift US 6,483,607 ist ein Verfahren bekannt, bei dem die Eigenschaften von Farbstoffen anhand von Probedrucken mit unterschiedlicher Flächenbedeckung ermittelt werden.

Beim Druck, insbesondere beim Stichtiefdruck, hat sich jedoch gezeigt, daß auch bei der Verwendung ein und derselben Druckmaschine, derselben Druckplatten, derselben Druckmaschineneinstellungen sowie gleichem Papier starke Abweichungen und Schwankungen des Farbeindrucks entstehen können, wenn zu verschiedenen Zeitpunkten gedruckte Dokumente visuell verglichen werden.

Weiterhin hat sich als problematisch erwiesen, daß die durch unterschiedliche Schichtdicken der Druckfarbe verursachten Unterschiede bei der visuellen Beurteilung zu unterschiedlichen Ergebnissen führen können. Dieses Problem wird dadurch noch verschärft, daß häufig mehrere verschiedenfarbige Druckfarben für die Herstellung eines Wertdokuments verwendet werden.

Die Patentschrift DE 39 250 11 beschreibt ein Verfahren zur Überwachung der Druckqualität, das die Bestimmung der Farbschichtdicke mit Hilfe von bildanalytischen Methoden beianhaltet.

Es ist daher die Aufgabe der vorliegenden Erfindung, ein Verfahren für die Überprüfung und Auswahl von Druckfarben, insbesondere für Stichtiefdruckfarben, anzugeben, welches die Überprüfung und Qualitätsbeurteilung sicher und zuverlässig gestattet, und welches es ermöglicht, Druckfarben derart aufeinander abzustimmen, daß die Verwendung von mehreren Druckfarben unterschiedlicher Farbe zu reproduzierbaren Druckergebnissen mit gleichartigen visuellen Eigenschaften führt.

Erfindungsgemäß wird diese Aufgabe durch ein Verfahren für die Überprüfung von Druckfarben, insbesondere Stichtiefdruckfarben, für die Charakterisierung der colorimetrischen Eigenschaften der Druckfarben gelöst, bei dem, zumindest zwei Probedrucke bereitgestellt werden, die mit der zu überprüfenden Druckfarbe flächenhaft bedruckt sind, wobei die Druckfarbe von unterschiedlichen Probedrucken unterschiedliche Schichtdicken aufweist; Messen von Flächengewichten und Remissionsspektren der zumindest zwei Probedrucke; Ermitteln der Schichtdicken aus den gemessenen Flächengewichten; Ermitteln von Kubelka-Munk-Koeffizienten für die zumindest zwei Probedrucke aus den gemessenen Remissionsspektren; und Ableiten von Farborten, insbesondere nach CIELAB, für beliebige Schichtdicken der zu überprüfenden Druckfarbe aus den Kubelka-Munk-Koeffizienten.

Das erfindungsgemäße Verfahren weist den Vorteil auf, daß der Farbeindruck von Druckfarben, die in unterschiedlichen Schichtdicken verdruckt werden, ohne weiteres überprüft werden kann. Durch die Verwendung der Kubelka-Munk-Koeffizienten und der daraus abgeleiteten Farborte ist eine Überprüfung für beliebige Schichtdicken der Druckfarben möglich, auch wenn für die jeweils zu überprüfenden Schichtdicken kein Probedruck bereitgestellt wurde.

Nach dem derzeitigen Stand der Technik sind die schichtstärkenabhängigen Variationen der Farborte von Druckfarben mehr oder weniger Zufallsprodukte. Der Designer weiß nicht im voraus, welche Farbortänderung bei einer von ihm gewünschten Farbe möglich ist. Eine besondere Herausforderung für den Designer ist, daß er bei seinen Entwürfen meistens nicht nur eine Banknote konzipieren muß, sondern meistens eine komplette Neuemission mit etwa 6 bis 8 verschiedenen Denominationen. Die verschiedenen Banknoten einer Emission sollen sich meistens deutlich im Farbton unterscheiden, aber künstlerisch eine einheitliche Familie bilden.

Daher ist es die weitere Aufgabe der vorliegenden Erfindung, dem Farbhersteller und dem Designer ein Verfahren zu liefern, mit dem die schichtstärkenabhängigen Eigenschaften der Druckfarben nach Kriterien des Designs optimiert werden können. Insbesondere soll es dem Farbhersteller und dem Designer die Möglichkeit liefern, Familien von Farben zu kreieren, die in ihren schichtstärkenabhängigen Eigenschaften Ähnlichkeiten aufweisen, obwohl jede Familie 6 bis 8 unterschiedliche Farbtöne enthalten muß.

In einer Ausgestaltung wird das erfindungsgemäße Verfahrens für die Bereitstellung von Druckfarben, insbesondere für Stichtiefdruckfarben, verwendet, wobei mehrere Druckfarben unterschiedlicher Farbe festgelegt werden, und die verschiedenen Farben bei einer definierten Sichtdicke gleiche Farbsättigung und/ oder Dunkelstufe aufweisen.

Dadurch wird es besonders vorteilhaft möglich Druckfarben bereitzustellen, deren farbliches Erscheinungsbild aufeinander abgestimmt ist und deren farbliches Erscheinungsbild auch dann sicher vorherbestimmt werden kann, wenn die Druckfarben in unterschiedlichen Schichtdicken verdruckt werden. Die Verwendung unterschiedlicher Schichtdicken kann dabei auch in einem Design, z. B. einem Wertdokument, wie einer Banknote, vorgesehen sein, wobei auch für diesen Fall das zu erwartende farbliche Erscheinungsbild sicher vorherbestimmt werden kann.

Besonders effizient und vorteilhaft läßt sich das erfindungsgemäße Verfahren einsetzen, wenn ein Computer mit zugehöriger Anzeige vorgesehen wird, der die Darstellung des farblichen Erscheinungsbilds der Druckfarben mit unterschiedlicher Schichtdicke ermöglicht. Insbesondere die Darstellung von Designs, z. B. Wertdokumenten, wie Banknoten, während der Entwurfsphase ist von großem Vorteil, da es in diesem Fall ohne aufwendige Druckversuche möglich ist, das farbliche Erscheinungsbild des Designs exakt festzulegen.

Weitere Vorteile der vorliegenden Erfindung ergeben sich aus den abhängigen Ansprüchen sowie der nachfolgenden Beschreibung der Erfindung anhand von Figuren.

Es zeigt:

Figur 1    eine schematische Darstellung der Änderung des Farborts einer ersten Druckfarbe, bei einer Variation des Flächengewichts,

Figur 2    eine schematische Darstellung der Änderung des Farborts einer zweiten Druckfarbe, bei einer Variation des Flächengewichts, und

Figur 3    eine schematische Darstellung des Farbabstands ΔE der Farborte einer Farbe mit maximalem und minimalem Flächengewicht, in Abhängigkeit von der Farbkonzentration FK.

Das erfindungsgemäße Verfahren zur Überprüfung von Druckfarben, insbesondere Stichtiefdruckfarben, für die Charakterisierung der colorimetrischen Eigenschaften der Druckfarben, beruht auf der Herstellung von Probedrukken, die flächenhaft bzw. vollflächig mit der zu prüfenden Druckfarbe bedruckt sind, wobei mindestens zwei Probedrucke hergestellt werden, die unterschiedliche Schichtdicken der zu prüfenden Druckfarbe aufweisen. Dazu werden die Probedrucke mit unterschiedlichen Flächengewichten bedruckt, beispielsweise mit etwa 1, 2, 4, 8, 16 und 32 Gramm Druckfarbe pro Quadratmeter. Dabei ist es besonders vorteilhaft, daß die bisher beim Stand der Technik übliche, genaue Einhaltung der vorgeschriebenen Flächengewichte überflüssig ist. Die Bedruckung mit einem bestimmten Flächengewicht ergibt eine bestimmte, vom Flächengewicht abhängige Schichtdicke. Diese wird durch Wiegen der verbrauchten Druckfarbe zur Ermittlung des tatsächlichen Flächengewichts bestimmt, aus dem sich, zusammen mit der bedruckten Fläche, die Schichtdicke ergibt. Falls beim Probedruck mit niedrigen Flächengewichten technische Schwierigkeiten auftreten, insbesondere beim Farbtransfer, kann die Druckfarbe mit Bindemittel oder Lösungsmittel verdünnt werden und dann mit einem entsprechend höheren Flächengewicht verdruckt werden, so daß sich die erwähnten Schwierigkeiten nicht ergeben.

Anschließend werden die Remissionsspektren der Probedrucke mittels eines Spektralfotometers gemessen. Dabei hat es sich als vorteilhaft erwiesen, mehrere Messungen für jeden Probedruck bzw. jede Schichtdicke durchzuführen und Mittelwerte für die einzelnen Meßwerte zu bilden. Sollten für einen Probedruck bzw. eine Schichtdicke die Meßwerte starke Schwankungen aufweisen, sollte der Probedruck mit der bestimmten Schichtdicke erneut hergestellt werden, da derartige starke Schwankungen auf Probleme beim Druck des Probedrucks hinweisen.

Aus den gemessenen Remissionsspektren der Probedrucke bzw. deren Mittelwerten werden anschließend Kubelka-Munk-Koeffizienten ermittelt, wobei insbesondere das Remissionsspektrum des Substrats, beispielsweise von Papier, sowie eine Sounderson-Korrektur berücksichtigt wird. Dazu werden die oben beschriebenen vollflächigen Andrucke mit mindestens zwei verschiedenen Flächengewichten hergestellt, vorzugsweise mit mehr als zwei verschiedenen Flächengewichten, z.B. etwa 1, 2, 4, 8, 16, 32 $g/m^2$, um die Genauigkeit der Ermittlung der Kubelka-Munk-Koeffizienten S und K zu erhöhen. Die Kulbelka-Munk-Koeffizienten K und S stellen den Absorptionskoeffizienten für diffuse Beleuchtung sowie den Streukoeffizienten der Druckfarbe dar.

Bei der Messung mit dem Sprektralfotometer werden beispielsweise für die Wellenlängen 380nm, 390nm, ..., 730nm, d. h. in Abständen von 10 nm, folgende Schritte durchgeführt:

Berechnen von der Remission r aus S, K, der Remission $r_0$ des Hintergrunds, d. h. des Substrats, und des Flächengewichtes $m_F$.

$$r(S, K, r_0, m_F) = \frac{1 - r_0 \, (a - b \, Coth(b \, S \, m_F))}{a - r_0 + b \, Coth(b \, S \, m_F)} \quad \text{mit } a = 1 + K/S, \quad b = \sqrt{a^2 - 1}$$

Dieser Wert wird anschließend Saunderson-korrigiert, um Oberflächeneffekte (z.B. Glanz) zu berücksichtigen. Wenn der Brechungsindex der Farbschicht von 1 verschieden ist, dringt nicht die gesamte Strahlung in die Schicht ein (Parameter $R_i$) und nicht die gesamte an die innere Oberfläche gelangende Strahlung tritt aus (Parameter $R_a$). Dieser Effekt wird näherungsweise durch die Saunderson-Korrektur mit der nachfolgenden Formel behoben.

$$Saunderson(r) = \frac{r - f \cdot R_a}{r \cdot R_i + (1 - R_a) \cdot (1 - R_i) - f \cdot R_a \cdot R_i}$$

Dabei beschreibt $f$ den Faktor der meßtechnischen Erfassung des Oberflächenreflexes. Er ist 0 bei hochglänzenden Proben und vollständigem Glanzausschluß bei der Messung, und er ist 1 bei vollständigem Glanzeinschluß und kann je nach Meßbedingung dazwischen liegen.

Bei der Berechnung können S und K solange systematisch variiert werden, bis die theoretischen Remissionswerte mit den gemessenen Remissionswerten für die verschiedenen Flächengewichte im Durchschnitt am besten übereinstimmen. Auf diese Weise erhält man die Streu- und Absorptionskoeffizienten S($\lambda$) und K($\lambda$) als Funktion der Wellenlänge $\lambda$.

Aus den Kubelka-Munk-Koeffizienten werden schließlich die Farborte der Druckfarbe für die unterschiedlichen Schichtdicken abgeleitet, beispielsweise nach CIELAB. Ebenso ist die Verwendung anderer Farbräume möglich. Aus den verschiedenen Schichtdicken der Probedrucke läßt sich somit im Farbraum eine Funktion bestimmen, welche den Farbeindruck der Druckfarbe in Abhängigkeit von der Schichtdicke beschreibt.

Es ist offensichtlich, daß das oben beschriebene Verfahren für die Überprüfung von Druckfarben für jede zu verwendende bzw. zu überprüfende Druckfarbe in der beschriebenen Weise durchgeführt werden muß.

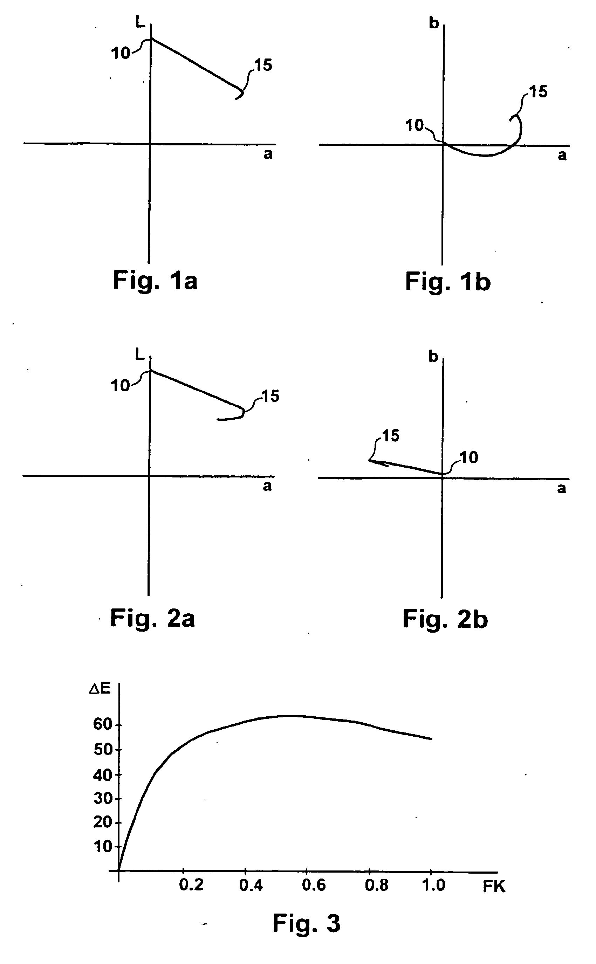

Figur 1 zeigt eine schematische Darstellung der Änderung des Farborts bzw. des Farbeindrucks einer ersten Druckfarbe, bei einer Variation des Flächengewichts der Druckfarbe. In Figur 1a ist der Weg des Farborts in einer Projektion auf die (L, a)-Ebene dargestellt. Die Kurve beginnt beim Farbort 10 des Substrats, d. h. des Papiers, also mit einer Schichtdicke der zu untersuchenden Druckfarbe von Null. Mit zunehmender Schichtdicke wächst die Farbsättigung bis zu einem Maximum 15 und nimmt danach wieder ab. Das Ende der Kurve entspricht einer theoretisch unendlich dicken Schicht. Derselbe Weg des Farborts ist in Figur 1b für eine Projektion auf die (a, b)-Ebene dargestellt. Die Kurve beginnt wieder am Farbort 10 des unbedruckten Substrats und läuft in einem Bogen bis zu einem Maximum 15, und schließlich weiter bis zu einer theoretisch unendlich dicken Schicht. Der bogenförmige Verlauf kennzeichnet eine große Variation des Farbtons bei unterschiedlichen Schichtdicken der Druckfarbe. Die der Figur 1 zugrunde liegende Druckfarbe trägt die Bezeichnung 9 W 3002 und wird von der Fa. Sicpa angeboten.

In Figur 2 ist eine schematische Darstellung der Änderung des Farborts einer zweiten Druckfarbe, bei einer Variation des Flächengewichts bzw. der Schichtdicke dargestellt. Wie insbesondere aus der Figur 2b zu entnehmen ist, ist der Farbton dieser Druckfarbe nahezu nicht abhängig vom Flächengewicht bzw. der Schichtstärke der Druckfarbe. Die zweite Druckfarbe wird ebenfalls von der Fa. Sicpa angeboten und trägt die Bezeichnung 9 W 5030.

Neben der oben beschriebenen Vorgehensweise zur colorimetrischen Charakterisierung von Druckfarben, bei der von einer Reihe fest vorgegebener Schichtdicken der Druckfarbe ausgegangen wird, kann eine Charakterisierung der Druckfarben auch mittels anderer Parameter erfolgen, beispielsweise durch Farbort (L, a, b) und Flächengewicht bzw. Schichtdicke für die größte Farbsättigung der verwendeten Druckfarbe.

Zur Charakterisierung des Unterschieds zwischen zwei an sich gleichen Druckfarben kann ausgehend von der Sollkurve einer Referenzdruckfarbe eine Istkurve der zu überprüfenden Farbe ermittelt werden. Die Fläche, die zwischen beiden Kurven im (L, a, b)-Farbraum aufgespannt wird, ist in diesem Fall ein Maß für die Abweichung.

Es ist offensichtlich, daß statt der Verwendung des (L, a, b)-Farbraums auch andere Farbräume wie (X, Y, Z), (L, u, v), (L*, a*, b*), usw. verwendet werden können, da diese durch eindeutige Transformationen ineinander übergeführt werden können. Ebenso ist es offensichtlich, daß das Verfahren, neben der Überprüfung von Druckfarben für den Stichtiefdruck, auch für alle anderen Druckfarben verwendet werden, die mit unterschiedlichen Flächengewichten verdruckt werden.

Bei der Verwendung von Stichtiefdruck zur Herstellung von Wertpapieren, beispielsweise Banknoten, werden mehrere verschiedenfarbige Druckfarben benötigt, da die Banknoten in der Regel unterschiedliche Farben aufweisen, zumindest weisen jedoch Banknoten unterschiedlicher Denomination unterschiedliche Farben auf. Neben den unterschiedlichen Farben kann als weiteres Gestaltungsmittel vorgesehen sein, das Design für den Stichtiefdruck mit unterschiedlichen Gravurtiefen zu versehen, wodurch eine weitere Variation des Farbeindrucks möglich ist, was weitere Gestaltungsmöglichkeiten für das Design der Banknoten eröffnet. Für Gravuren mit einer Tiefe von 15 μm ergibt sich für den Farbton bzw. die Helligkeit eines mit einer derartigen Gravur gedruckten Elements ein heller Farbeindruck. Bei 30 μm Gravurtiefe ergibt sich ein mittlerer, bei 60 μm ein dunkler und bei 120 μm ein sehr dunkler Farbton. Für die beschriebenen Gravurtiefen ergeben sich dabei üblicherweise Schichtdicken der übertragenen Farbschichten von 0,5 bis 12 μm, nach dem Verdunsten des verwendeten Lösungsmittels.

Bei der Herstellung von verschiedenfarbigen Druckfarben, beispielsweise 6 bis 8 Druckfarben mit unterschiedlichen Farbtönen geht man üblicherweise von Basisfarben aus. Dies sind Druckfarben, die vorzugsweise von Monopigmentdruckfarben gebildet werden, d. h. nur ein Buntpigment enthalten, und die Mischung aller weiteren benötigten Farben bzw. Farbtöne erlauben. Diese Druckfarben enthalten vorzugsweise hochlasierende Pigmente oder Pigmentmischungen, um eine möglichst große Farbton-/Farbhelligkeitsdifferenz bei minimaler und maximaler Farbdicke zu ermöglichen.

Für die beschriebenen Basisfarben werden nach dem oben beschriebenen Verfahren Kubelka-Munk-Koeffizienten bestimmt.

Mittels der für die Basisfarben bestimmten Kubelka-Munk-Koeffizienten werden für definierte Gravurtiefen Druckfarben unterschiedlicher Farbstimmung mit maximalem Farbabstand bzw. maximaler Dunkelstufe festgelegt. Damit die festgelegten Druckfarben zueinander harmonieren, wird die Festlegung beispielsweise so vorgenommen, daß die Druckfarben bei der maximalen Schichtdicke (die sich aus der maximalen Gravurtiefe und Gravurform ergibt) eine gleiche Farbsättigung und/oder Dunkelstufe aufweisen.

Das Design eines Wertdokuments, beispielsweise einer Banknote, kann dann mittels der festgelegten Druckfarben ausgeführt werden, die hinsichtlich der beim Druck zu erwartenden Farbstimmungen, auch abhängig von der Schichtdicke, bekannt sind und somit exakt vorherbestimmbar in das Design einbezogen werden können.

Neben der oben beschriebenen Festlegung bestimmter Farbstimmungen der Druckfarben ist es auch möglich, daß gewünschte Farbstimmungen speziell für ein Design eines Wertdokuments festgelegt werden. In diesem Fall wird der gewünschte Farbton für die maximale Schichtdicke festgelegt, weitere Schichtdicken weisen einen maximalen Farbabstand und/oder maximale Dunkelstufe auf. Alternativ ist es möglich, daß Druckfarben bei unterschiedlichen Schichtdicken gleichen Farbabstand und/oder gleiche Dunkelstufe aufweisen, wobei in diesem Fall der Farbabstand bzw. die Dunkelstufe für die maximale Schichtdicke gleich sein sollten.

Zur colorimetrischen Optimierung der Druckfarben können verschiedene Kriterien herangezogen werden.

Beispielsweise soll der Farbabstand der Farborte in einem Farbraum zwischen der maximalen Schichtdicke der Druckfarbe und der minimalen Schichtdicke der Druckfarbe maximal sein bzw. einem definierten Wert entsprechen. Mittels der Kubelka-Munk-Theorie werden die Farborte für maximale und minimale Schichtdicke sowie der Farbabstand dieser beiden Farborte bestimmt. Durch Verdünnen der Farbe mit Transparentweiß kann man die Farbstärke der Druckfarbe verändern. In Figur 3 ist für eine Farbe in Abhängigkeit von der Farbkonzentration FK der Farbabstand $\Delta E$ dargestellt, den man erhält, wenn man die Farbe mit dem drucktechnisch erreichbarem minimalen und maximalen Flächengewicht andruckt. Der Figur 3 kann man entnehmen, bei welcher Konzentration bzw. Verdünnung der größte Farbabstand $\Delta E$ erreicht wird.

Ebenso kann festgelegt werden, daß einzelne Druckfarben oder alle Druckfarben bei der maximalen Schichtdicke eine bestimmte Dunkelstufe oder Farbsättigung aufweisen. Weiterhin kann es gewünscht sein, daß einzelne oder alle Druckfarben bei der maximalen Schichtdicke dieselbe vorgegebene Farbdichte aufweisen und bei geringerer Schichtdicke eine möglichst hohe Farbsättigung erreichen.

Schließlich kann es auch wünschenswert sein, daß einzelne oder alle Druckfarben bei vorgegebener Änderung der Schichtdicke möglichst gleich große und/ oder kleine Änderungen des Farbtons aufweisen.

Wenn man durch Mischung von Basisfarben eine Farbe erhalten will, die bei vorgegebenen Schichtstärken vorgegebene Farborte möglichst genau erreichen soll, so kann man diese Optimierungsaufgabe ebenfalls mit Hilfe der Kubela-Munk-Theorie lösen.

Für die Absorptionskoeffizienten $K(\lambda)$ und Streukoeffizienten $S(\lambda)$ einer Mischfarbe aus n Komponenten gilt die Beziehung

$$K(\lambda) = c_1 K_1(\lambda) + ... + c_n K_n(\lambda)$$

und

$$S(\lambda) = c_1 S_1(\lambda) + ... + c_n S_n(\lambda),$$

wobei $c_i$ die Konzentration der i-ten Farbkomponente ist.

Das gesuchte Mischungsverhältnis erhält man also durch Variation der Konzentrationen $c_i$. Hierdurch ist auch Spezialfall n=1 abgedeckt, daß man durch Verdünnen mit Transparentlack die Konzentration c so wählen kann, daß eine Farbe bei einem bestimmten Flächengewicht eine gewünschte Dunkelstufe erreicht.

Besonders vorteilhaft läßt sich die Erfindung anwenden, wenn die beschriebenen Verfahren mittels eines Computers umgesetzt werden, auf dessen zugehöriger Anzeige der Farbeindruck der Druckfarben für beliebige Schichtdicken dargestellt werden können. In diesem Fall ist es möglich, daß der Farbeindruck auch für beliebige Mischungen der bekannten Druckfarben für beliebige Schichtstärken bestimmt und auf der Anzeige dargestellt wird. Dadurch lassen sich neue Entwürfe bzw. Designs von Wertpapieren, insbesondere Banknoten, auf der Anzeige darstellen und der Farbeindruck des Designs kann geprüft und abgestimmt werden, ohne daß Probedrucke erforderlich sind.

**Patentansprüche**

1. Verfahren für die Überprüfung von Druckfarben, insbesondere Stichtiefdruckfarben, für die Charakterisierung der colorimetrischen Eigenschaften der Druckfarben, mit nachfolgenden Verfahrensschritten,

    a) Bereitstellung von zumindest zwei Probedrucken, die mit der zu überprüfenden Druckfarbe flächenhaft bedruckt sind, wobei die Druckfarbe der unterschiedlichen Probedrucke unterschiedliche Schichtdicken aufweist;
    b) Messen von Flächengewichten und der Remissionsspektren der zumindest zwei Probedrucke;
    c) Ermitteln der Schichtdicken aus den gemessenen Flächengewichten;
    d) Ermitteln von Kubelka-Munk-Koeffizienten aus den gemessenen Remissionsspektren; und
    e) Ableiten von Farborten, insbesondere nach CIELAB, für beliebige Schichtdicken der zu überprüfenden Druckfarbe aus den Kubelka-Munk-Koeffizienten.

2. Verfahren nach Anspruch 1, **dadurch gekennzeichnet, daß** die Verfahrensschritte a) bis e) für jede zu überprüfende Druckfarbe durchgeführt werden.

3. Verfahren nach Anspruch 1 oder 2, **dadurch gekennzeichnet, daß** die unterschiedlichen Schichtdicken nach Verfahrensschritt a) durch Drucken mit verschiedenen Flächengewichten hergestellt werden, insbesondere von etwa 1, 2, 4, 8,16 und 32 Gramm Druckfarbe pro Quadratmeter.

4. Verfahren nach einem der Ansprüche 1 bis 3, **dadurch gekennzeichnet, daß** das Messen der Remissionsspektren nach Verfahrensschritt b) für jeden Probedruck mehrfach durchgeführt wird, und daß ein Mittelwert für die gemessenen Remissionsspektren jedes Probedrucks und/ oder jeder Teilfläche gebildet wird.

5. Verfahren nach einem der Ansprüche 1 bis 4, **dadurch gekennzeichnet, daß** mit den ermittelten Kubelka-Munk-Koeffizienten die Farborte von beliebigen Mischungen und Flächengewichten der Basisfarben ermittelt werden.

6. Verfahren nach einem der Ansprüche 1 bis 5, **dadurch gekennzeichnet, daß** Mischungsverhältnisse von Farbmischungen mit vorgegebenen Farborten mit der Kubelka-Munk-Theorie optimiert werden.

7. Verfahren für die Auswahl von Druckfarben, insbesondere Stichtiefdruckfarben, unter Verwendung des Verfahrens nach einem der Ansprüche 1 bis 6, **dadurch gekennzeichnet, daß** mehrere Druckfarben unterschiedlicher Farbtöne festgelegt werden, wobei die unterschiedlichen Druckfarben bei einer definierten Schichtdicke gleiche Farbsättigung und/oder Dunkelstufe aufweisen.

8. Verfahren nach Anspruch 7, **dadurch gekennzeichnet, daß** die Druckfarben unterschiedlicher Farbtöne einen maximalen Farbabstand und/oder maximale Dunkelstufe aufweisen.

9. Verfahren nach Anspruch 7, **dadurch gekennzeichnet, daß** jede der Druckfarben bei unterschiedlichen Schichtdicken maximalen Farbabstand und/oder maximale Dunkelstufe aufweist.

10. Verfahren nach Anspruch 7, **dadurch gekennzeichnet, daß** jede der Druckfarben bei unterschiedlichen Schichtdicken einen gleichen Farbabstand und/oder gleiche Dunkelstufe aufweist.

11. Verfahren nach einem der Ansprüche 7 bis 10, **dadurch gekennzeichnet, daß** die Druckfarben aus monopigmenttierten Basisfarben gebildet werden, die insbesondere hochlasierende Pigmente enthalten.

**12.** Verfahren nach einem der Ansprüche 1 bis 11, **dadurch gekennzeichnet, daß** der Farbeindruck der Druckfarben für beliebige Schichtdicken mittels eines Computers mit zugehöriger Anzeige dargestellt wird.

**13.** Verfahren nach Anspruch 12, **dadurch gekennzeichnet, daß** der Farbeindruck für Mischungen der Druckfarben für beliebige Schichtdicken dargestellt wird.

**14.** Verfahren nach Anspruch 12 oder 13, **dadurch gekennzeichnet, daß** der Farbeindruck der Druckfarben für ein Design eines Wertpapiers dargestellt wird.

**Claims**

**1.** A method for checking printing inks, in particular intaglio printing inks, for characterizing the colorimetric properties of the printing inks, having the following method steps,

> a) providing at least two test prints printed areally with the printing ink to be checked, the printing ink of the different test prints having different layer thicknesses;
> b) measuring weights per unit area and the remission spectra of the at least two test prints;
> c) determining the layer thicknesses from the measured weights per unit area;
> d) determining Kubelka-Munk coefficients from the measured remission spectra; and
> e) deriving color locations, in particular according to CIELAB, for any layer thicknesses of the printing ink to be checked from the Kubelka-Munk coefficients.

**2.** A method according to claim 1, **characterized in that** method steps a) to e) are carried out for each printing ink to be checked.

**3.** A method according to claim 1 or 2, **characterized in that** the different layer thicknesses according to method step a) are produced by printing with different weights per unit area, in particular of e.g. 1, 2, 4, 8, 16 and 32 grams of printing ink per square meter.

**4.** A method according to any of claims 1 to 3, **characterized in that** the measuring of the remission spectra according to method step b) is performed several times for each test print, and an average is formed for the measured remission spectra of each test print and/or patch.

**5.** A method according to any of claims 1 to 4, **characterized in that** the color locations of any mixtures and weights per unit area of the basic colors are determined with the Kubelka-Munk coefficients determined.

**6.** A method according to any of claims 1 to 5, **characterized in that** mixing ratios of color mixtures with predefined color locations are optimized with the Kubelka-Munk theory.

**7.** A method for selecting printing inks, in particular intaglio printing inks, using the method according to any of claims 1 to 6, **characterized in that** a plurality of printing inks of different hues are specified, the different printing inks having the same color saturation and/or blackness value at a defined layer thickness.

**8.** A method according to claim 7, **characterized in that** the printing inks of different hues have a maximum color difference and/or maximum blackness value.

**9.** A method according to claim 7, **characterized in that** each of the printing inks has maximum color difference and/or maximum blackness value at different layer thicknesses.

**10.** A method according to claim 7, **characterized in that** each of the printing inks has the same color difference and/or blackness value at different layer thicknesses.

**11.** A method according to any of claims 7 to 10, **characterized in that** the printing inks are formed from monopigmented basic colors containing in particular high-transparency pigments.

**12.** A method according to any of claims 1 to 11, **characterized in that** the color effect of the printing inks for any layer thicknesses is represented by means of a computer with an associated display.

**13.** A method according to claim 12, **characterized in that** the color effect for mixtures of the printing inks for any layer thicknesses is represented.

**14.** A method according to claim 12 or 13, **characterized in that** the color effect of the printing inks for a design of a paper of value is represented.


**Revendications**

**1.** Procédé pour la vérification des encres d'impression, notamment des encres pour héliogravure, pour la caractérisation des caractéristiques colorimétriques des encres d'impression, comportant les étapes de procédé suivantes :

a) Mise à disposition d'au moins deux épreuves, lesquelles sont imprimées à la surface à l'encre d'impression à vérifier, l'encre d'impression des différentes épreuves présentant des épaisseurs de couche différentes ;
b) Mesure des masses par mètre carré et des spectres de réflectance des épreuves au moins au nombre de deux ;
c) Détermination des épaisseurs de couche à partir des masses par mètre carré mesurées ;
d) Détermination des coefficients de Kubelka-Munk à partir des spectres de réflectance mesurés ; et
e) Déduction des positions chromatiques, en particulier selon CIELAB, pour les épaisseurs de couche au choix de l'encre d'impression à vérifier à partir des coefficients de Kubelka-Munk.

**2.** Procédé selon la revendication 1, **caractérisé en ce que** les étapes de procédé a) à e) sont réalisées pour chaque encre d'impression à vérifier.

**3.** Procédé selon la revendication 1 ou 2, **caractérisé en ce que** les différentes épaisseurs de couche selon l'étape de procédé a) sont fabriquées lors de l'impression avec des masses par mètre carré différentes, notamment d'environ 1, 2, 4, 8, 16 et 32 grammes d'encre d'impression par mètre carré.

**4.** Procédé selon l'une quelconque des revendications 1 à 3, **caractérisé en ce que** la mesure des spectres de réflectance selon l'étape de procédé b) est réalisée plusieurs fois pour chaque épreuve, et qu'une valeur moyenne est établie pour les spectres de réflectance mesurés de chaque épreuve et/ou de chaque surface partielle.

**5.** Procédé selon l'une quelconque des revendications 1 à 4, **caractérisé en ce que**, grâce aux coefficients de Kubelka-Munk déterminés, on fournit les positions chromatiques d'un quelconque mélange et masse par mètre carré des couleurs de base.

**6.** Procédé selon l'une quelconque des revendications 1 à 5, **caractérisé en ce que** les proportions de mélange des mélanges de couleurs sont optimisées avec des positions chromatiques prédéfinies selon la théorie de Kubelka-Munk.

**7.** Procédé pour la sélection des encres d'impression, notamment des encres pour héliogravure, par l'utilisation du procédé selon l'une quelconque des revendications 1 à 6, **caractérisé en ce que** plusieurs encres d'impression de teintes différentes sont déterminées, sachant que les différentes encres d'impression présentent la même saturation de couleur et/ou la même clarté pour une épaisseur de couche définie.

**8.** Procédé selon la revendication 7, **caractérisé en ce que** les encres d'impression de teintes différentes présentent un écart chromatique maximal et/ou une clarté maximale.

**9.** Procédé selon le revendication 7, **caractérisé en ce que** chacune des encres d'impression, au niveau des différentes épaisseurs de couche, présente un écart chromatique maximal et/ou une clarté maximale.

**10.** Procédé selon la revendication 7, **caractérisé en ce que** chacune des encres d'impression, au niveau des différentes épaisseurs de couche, présente un même écart chromatique et/ou une même clarté.

**11.** Procédé selon l'une quelconque des revendications 7 à 10, **caractérisé en ce que** les encres d'impression sont fabriquées à partir de couleurs de base mono-pigmentées, qui contiennent en particulier des pigments hautement transparents.

**12.** Procédé selon l'une quelconque des revendications 1 à 11, **caractérisé en ce que**, pour les épaisseurs de couche au choix, l'impression de couleur des encres d'impression est représentée au moyen d'un ordinateur doté d'un affichage associé.

**13.** Procédé selon la revendication 12, **caractérisé en ce que**, pour les épaisseurs de couche au choix, l'impression de couleur pour les mélanges des encres d'impression est représentée.

**14.** Procédé selon la revendication 12 ou 13, **caractérisé en ce que** l'impression de couleur des encres d'impression pour une création d'un papier valeur est représentée.

**Fig. 1a**

**Fig. 1b**

**Fig. 2a**

**Fig. 2b**

**Fig. 3**